# EUROPÄISCHE PATENTANMELDUNG

(11) **EP 1 070 626 A2**
(43) Veröffentlichungstag der Anmeldung: **24.01.2001**
(21) Anmeldenummer: 00112227.4
(22) Anmeldetag: 07.06.2000
(51) Int. Cl.: B60N 2/02

(54) **Anordnung und Verfahren zur individuellen und selbsttätigen Funktionseinstellung von Baugruppen eines Kraftfahrzeuges**

(30) Priorität: 19.07.1999 DE 19933769
(71) Anmelder: Volkswagen Aktiengesellschaft, 38436 Wolfsburg (DE)
(72) Erfinder: Lent-Philipps, Hans-Martin, Dr., 38518 Gifhorn (DE)

(57) **Zusammenfassung**

Die Erfindung betrifft ein Verfahren und eine Anordnung zur individuellen und selbsttätigen Funktionseinstellung von Baugruppen eines Kraftfahrzeuges, insbesondere von der Sicherheit des Fahrers dienenden Baugruppen auf der Basis von fahrerspezifischen Kenndaten.

Durch die Erfindung soll ein Verfahren und eine Anordnung zur individuellen und selbsttätigen Funktionseinstellung von fahrerbezogenen Baugruppen eines Kraftfahrzeuges angegeben werden, das vergleichsweise einfach zu realisieren ist und das eine genaue Einstellung der Baugruppen ermöglicht.

Nach dem erfindungsgemäßen Verfahren wird aus der individuellen Einstellung des Innenspiegels (1) ein erstes Signal und aus der Winkeleinstellung der Sitzlehne (5) des Fahrersitzes ein zweites Signal gewonnen und in einer Recheneinheit (11) aus dem ersten und dem zweiten Signal ein die Position des Augpunktes (6) des Fahrzeugführers repräsentierendes drittes Signal berechnet. Mit dem dritten Signal wird die Funktionseinstellung von fahrerbezogenen Baugruppen (17; 18; 19; 20; 21; 22) im Kraftfahrzeug vorgenommen. Dazu ist der Innenspiegel (1) mit einem Sensor (12) zur Bestimmung des Einstellwinkels (8) gegenüber dem Lot (9) oder einem Fahrzeugteil versehen, der mit einer Recheneinheit (11) verbunden ist. Weiterhin ist die Recheneinheit (11) mit einem Sensor (14) zur Bestimmung des Abstandes des Kopfes (2) des Fahrers von der Kopfstütze (3) und einem Sensor (13) zur Bestimmung der Einstellung der Lehne (5) des Fahrersitzes verbunden. Ausgangsseitig ist die Recheneinheit (11) mit Stellmotoren zur Funktionseinstellung von Baugruppen (17; 18; 19; 20; 21; 22) gekoppelt.

## Beschreibung

Die Erfindung betrifft ein Verfahren und eine Anordnung zur individuellen und selbsttätigen Funktionseinstellung von Baugruppen eines Kraftfahrzeuges, insbesondere von der Sicherheit des Fahrzeugführers dienenden Baugruppen auf der Basis von fahrerspezifischen Kenndaten.

Moderne Kraftfahrzeuge verfügen über eine Vielzahl von ein- oder verstellbaren Funktionsbaugruppen, die einerseits sicherheitsrelevant sind und die andererseits der Bequemlichkeit des Fahrzeugführers dienen. Sicherheitsrelevant sind beispielsweise die Einstellung der Höhe des Umlenkpunktes für den Sicherheitsgurt und die Höheneinstellung der Kopfstützen. Das betrifft auch Einstellmöglichkeiten für die Außenspiegel oder die Lenkradhöhenverstellung. Der Bequemlichkeit des Fahrers dienende Funktionsbaugruppen sind zum Beispiel Einrichtungen zur individuellen Sitzeinstellung, oder für die Einstellung der Lüftungsdüsen der Klimaanlage oder zur Einstellung der günstigsten Lenkradposition.

Werden derartige Kraftfahrzeuge nur durch einen Fahrzeugführer genutzt, so ist es lediglich einmalig notwendig, den Sitz, die Gurtumlenkung, die Kopfstütze, die Spiegel usw. einzustellen. Benutzen mehrere Fahrzeugführer ein Kraftfahrzeug, so muß diese Einstellung bei jedem Fahrerwechsel vorgenommen werden. Dabei kann davon ausgegangen werden, daß die Sitzeinstellung geändert wird, wenn die Fahrer unterschiedlich groß sind und daß selbstverständlich auch zumindest der Innenspiegel eingestellt wird.

Bei Kraftfahrzeugen der höheren Komfortklasse ist eine Memory-Sitzverstellung vorgesehen, bei der durch die einfache Betätigung eines Schalters die jeweils angewählte individuelle Sitzeinstellung eingestellt wird. Auch sind bereits Memory-Sitzverstellungen bekannt geworden, die bei der Erkennung eines bestimmten Fahrzeugführers eine selbsttätige Einstellung anhand von Speicherwerten vornehmen.

In allen Fällen kann aber davon ausgegangen werden, daß der Fahrzeugführer es meistens versäumt, die Kopfstützen und die Sicherheitsgurtumlenkung richtig einzustellen, da eine fehlerhafte Einstellung nicht auffällt. Da diesen Einstellungen aber eine besondere Sicherheitsbedeutung zugemessen wird, muß gewährleistet werden, daß immer die für den jeweiligen Fahrzeugführer optimalen Einstellungen gewählt werden, was auch auf die Einstellung der Außenspiegel zutrifft.

Um hier Erleichterungen zu schaffen, ist beispielsweise aus der DE 31 38 712 A1 ein Gerät zur optimalen Winkeleinstellung von Fahrzeugvorrichtungen bekannt geworden. Basis für die Winkeleinstellung ist hier die auf der Basis der eingestellten Stellungswerte des Fahrersitzes berechnete Augenposition. Speziell wird hier die Winkeleinstellung der Rückenlehne und die Einstellung der Höhe der Kopfstütze für die Berechnung der Größe des Fahrzeugführers bzw. der Augenposition zugrundegelegt.

Auf der Basis dieser Berechnung werden dann eine für den jeweiligen Fahrer optimale Stellung der Anzeigegeräte, die Einstellung der Lüftungsdüsen der Klimaanlage sowie der Innen- und Außenspiegel vorgenommen.

Wird hier jedoch z.B. eine unpassende Verstellung der Kopfstütze vorgenommen, muß nachfolgend mit einer fehlerhaften bzw. nicht optimalen Einstellung der genannten Fahrzeugvorrichtungen gerechnet werden. Dies wird allerdings hier weitgehend dadurch minimiert, daß eine Grundgleichung zur Berechnung der Einstellwerte gespeichert ist.

Eine ähnliche Lösung ist auch aus der DE 195 19 619 A1 bekannt geworden. Auch hier wird auf der Basis einer Fahrersitz- und Lehnensensorik die Fahrergröße ermittelt und die Außen- und Innenspiegel auf Grund der Rechenwerte eingestellt. Weiterhin sind noch vom Innenspiegel ausgehende fokussierte Infrarotstrahlen vorgesehen, die auf den Kopf des Fahrers gerichtet sind, so daß bei einer Bewegung des Kopfes eine automatische Nachjustierung der Innenspiegel möglich wird.

Eine Ein- oder Nachstellung der Kopfstützeneinstellung und der Höhe der Gurtumlenkung sind hier jedoch in keinem Fall vorgesehen.

Der Erfindung liegt daher die Aufgabe zugrunde, ein Verfahren und eine Anordnung zur individuellen und selbsttätigen Funktionseinstellung von fahrerbezogenen Baugruppen eines Kraftfahrzeuges anzugeben, das vergleichsweise einfach zu realisieren ist und das die Nachteile des Standes der Technik vermeidet.

Die der Erfindung zugrundeliegende Aufgabenstellung wird bei einem Verfahren der eingangs genannten Art dadurch gelöst, daß aus der individuellen Einstellung des Innenspiegels ein erstes Signal gewonnen wird, daß aus Position bzw. Stellung des Fahrersitzes, vorzugsweise zumindest aus der Winkeleinstellung der Sitzlehne, ein zweites Signal gewonnen wird, daß in einer zentralen Recheneinheit aus dem ersten und dem zweiten Signal ein die Position der Augpunkte des Fahrers repräsentierendes drittes Signal berechnet wird und daß mit dem dritten Signal die Funktionseinstellung von fahrerbezogenen Baugruppen im Kraftfahrzeug vorgenommen wird.

Dieses Verfahren gewährleistet eine außerordentlich hohe Genauigkeit bei der Einstellung der sicherheitsrelevanten und fahrerbezogenen Baugruppen, da hier davon ausgegangen wird, daß der Fahrzeugführer in jedem Fall den Innenspiegel auf seine Bedürfnisse einstellt. Erfahrungsgemäß wird der Innenspiegel sofort nach dem Einsteigen oder zumindest nach einer kurzen Fahrtstrecke ein- oder nachgestellt.

Die individuelle Winkeleinstellung des Innenspiegels wird dabei gegenüber dem Lot oder einem Fahrzeugteil als erstes Signal ermittelt.

Da Kopf des Fahrzeugführers in der Regel nicht an der Kopfstütze anliegen sollte, ist es zur Erhöhung der Genauigkeit der Einstellung der fahrerbezogenen Baugruppen zweckmäßig, daß dem zweiten Signal ein Korrektursignal überlagert wird, wobei das Korrektursignal den Abstand des Kopfes in x-Richtung von der Kopfstütze repräsentiert.

In weiterer Fortführung der Erfindung werden durch die zentrale Recheneinheit aus dem dritten Signal Steuersignale berechnet, mit denen die Position der Kopfstütze und die Höhe der Gurtumlenkung eingestellt wird.

Eine weitere Ausgestaltung der Erfindung ist dadurch gekennzeichnet, daß mit den aus dem dritten Signal gewonnenen Steuersignalen die Außenspiegel individuell eingestellt werden. Auch ist es zweckmäßig, wenn mit den aus dem dritten Signal gewonnenen Steuersignalen eine Höhenverstellung des Lenkrades derart vorgenommen wird, daß eine vollständige InInstrumentensicht gewährleistet ist. Hierzu sieht eine Fortführung der Erfindung vor, daß dem dritten Signal bei der Berechnung des Steuersignales zur Lenkradhöhenverstellung ein lenkradspezifisches Korrektursignal überlagert wird.

In einer weiteren Ausgestaltung der Erfindung ist ein Sonnenstandssensor vorgesehen, der ein den Sonnenstand repräsentierendes Winkelsignal liefert, aus dem gemeinsam mit dem ersten Signal ein Steuersignal zur Steuerung einer elektrisch betätigbaren Sonnenblende berechnet wird, so daß der Blendbereich zuverlässig abgedeckt oder abgeblendet werden kann.

In einer besonderen Ausgestaltung des erfindungsgemäßen Verfahrens wird für die selbsttätige Funktionseinstellung von Baugruppen in einem ersten Schritt die Memory-Sitzeinstellung selbsttätig vorgenommen, wobei anschließend die Bestimmung der Augposition in Verbindung mit der Einstellung des Innenspiegels erfolgt und danach die fahrerbezogenen Baugruppen auf die fahrerspezifischen optimalen Positionen eingestellt werden.

Die der Erfindung zugrundeliegende Aufgabe wird weiterhin durch eine Anordnung zur Durchführung des Verfahrens mit einem elektrisch fernbedienbaren Innenspiegel dadurch gelöst, daß der Innenspiegel mit einem Sensor zur Bestimmung des Einstellwinkels gegenüber dem Lot oder einem Fahrzeugteil versehen ist, daß der Sensor mit einer zentralen Recheneinheit verbunden ist, daß die zentrale Recheneinheit weiterhin mit einem Sensor zur Bestimmung des Abstandes des Kopfes des Fahrers von der Kopfstütze und einem Sensor zur Bestimmung der Einstellung der Lehne des Fahrersitzes verbunden ist und daß die Recheneinheit ausgangsseitig mit Stellmotoren zur Funktionseinstellung von Baugruppen gekoppelt ist.

Die Stellmotoren können jeweils einzeln mit der zentralen Recheneinheit verbunden, oder einzeln adressierbar sein. Im letzteren Fall könnte dadurch ein Bussystem realisiert werden, wodurch der Verdrahtungsaufwand ganz erheblich verringert werden kann.

Zusätzlich kann vorgesehen sein, daß die Recheneinheit mit dem Speicher der Memory-Sitzeinstellung verbunden ist. Auf diese Weise läßt sich eine wesentliche Erhöhung der Genauigkeit der Einstellung der fahrerbezogenen Funktionsbaugruppen erreichen.

Die Erfindung soll nachfolgend an einem Ausführungsbeispiel näher erläutert werden. In den zugehörigen Zeichnungsfiguren zeigen:
- Fig. 1: eine schematische Darstellung der Position des Kopfes des Fahrzeugführers und die zugehörige Einstellung des Innenspiegels; und
- Fig. 2: ein schematisches Blockschaltbild der Anordnung zur individuellen Funktionseinstellung von fahrerbezogenen Baugruppen.

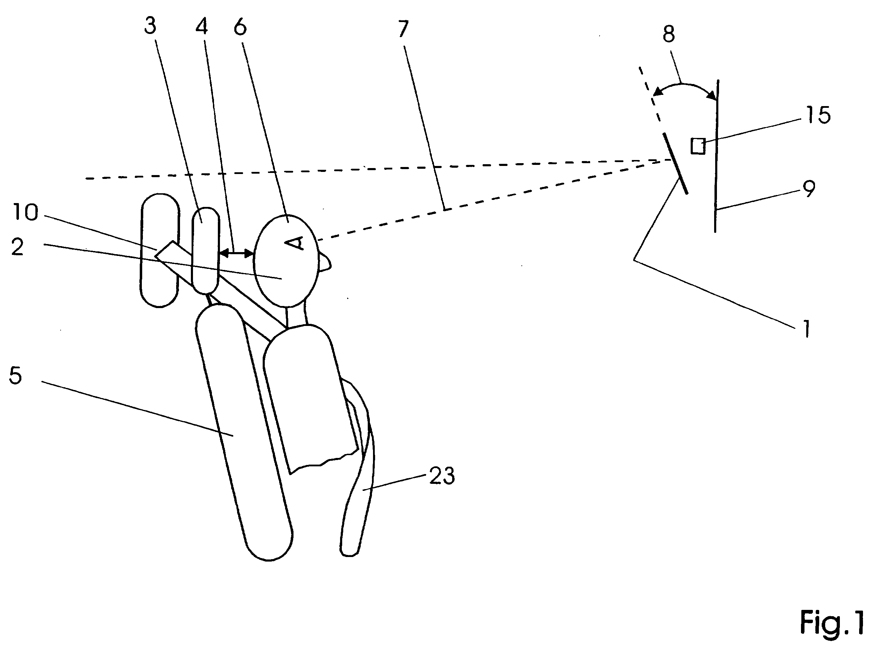

Aus Fig. 1 ist zunächst eine schematische Darstellung der Position des Fahrerkopfes 2 in Bezug auf den Innenspiegel 1 und dessen Einstellung in Bezug auf eine optimale Rücksicht ersichtlich. Das bedeutet, daß der Fahrzeugführer als erste Handlung den Innenspiegel 1 entsprechend seiner Größe einstellt und gegebenenfalls die Position der Sitzlehne 5 korrigiert, so daß bei der Blickrichtung 7 die Szene hinter dem Fahrzeug beobachtet werden kann. Durch die fahrerbezogene Einstellung des Innenspiegels 1 ergibt sich ein Einstellwinkel 8 gegenüber dem Lot 9 oder auch einem Fahrzeugteil, der für den jeweiligen Fahrzeugführer typisch ist.

Anschließend muß normalerweise noch die Kopfstütze 3 auf die Körpergröße des Fahrzeugführers eingestellt werden, damit die Kopfstütze 3 einen zuverlässigen Schutz des Halswirbelbereiches gewährleistet. Darüberhinaus sollte noch die Höhe der Gurtumlenkung 10 so eingestellt werden, daß eine Verletzungsgefahr durch den Sicherheitsgurt 23 im Halsbereich ausgeschlossen ist.

Nachdem zumindest der Innenspiegel 1 und die Neigung der Sitzlehne 5 eingestellt worden sind, kann aus dem Einstellwinkel 8 des Innenspiegels und der Neigung der Sitzlehne 5 die Augposition 6 berechnet werden. Für die genaue Ermittlung der Augposition 6 muß noch eine Korrekturgröße ermittelt werden, die den Abstand 4 des Fahrerkopfes 2 von der Kopfstutze 3 repräsentiert. Auf der Grundlage der Augposition 6 können dann Stellgrößen für verschiedene Fahrzeugeinrichtungen mit Hilfe einer zentralen Recheneinheit 11 berechnet werden, so daß dann beispielsweise die Kopfstütze 3 und die Gurtumlenkung 10 in die für den jeweiligen Fahrzeugführer günstigste Position gebracht werden können.

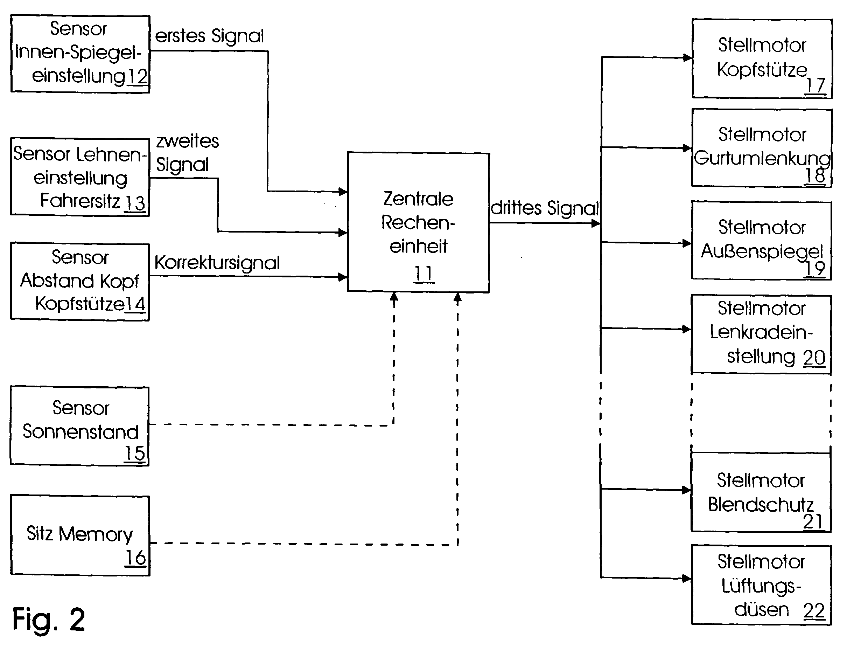

Fig. 2 zeigt schematisch die Signalverarbeitung zur Berechnung der Stellgrößen für die verschiedensten fahrerbezogenen Funktionsbaugruppen.
Zunächst müssen die benötigten Ausgangsdaten beschafft werden, wozu verschiedene Sensoren vorgesehen sind. Zunächst ist ein Sensor 12 für die Innenspiegeleinstellung vorgesehen, der ein erstes Signal für die zentrale Recheneinheit 11 liefert. Weiterhin ist ein Sensor 13 vorgesehen, der ein zweites Signal betreffend die Winkeleinstellung der Lehne 5 des Fahrersitzes an die zentrale Recheneinheit 11 weiterleitet.

Der Sensor 12 für die Innenspiegeleinstellung kann entfallen, wenn das Fahrzeug mit einer fernbedienbaren Innenspiegeleinstellung ausgestattet ist, da in diesem Fall der Einstellwinkel 8 des Innenspiegels 1 durch die Steuerung des Innenspiegels 1 bestimmt werden kann.

Aus dem ersten und dem zweiten Signal kann mittels der zentralen Recheneinheit 11 bereits die Augposition 6 in erster Näherung berechnet werden. Um jedoch die Augpostion 6 möglichst genau bestimmen zu können, muß noch ein Korrekturwert ermittelt werden, der sich auf den Abstand 4 des Kopfes 2 zur Kopfstütze 3 bezieht. Dieser Korrekturwert kann bei geringeren Genauigkeitsanforderungen als Durchschnittswert eingerechnet werden, oder es muß der Abstand 4 zwischen dem Kopf 2 und der Kopfstütze 3 gemessen werden. Hierzu ist in der Kopfstütze 3 ein Sensor 14 zur Messung des Abstandes zwischen der Kopfstütze 3 und dem Kopf 2 vorgesehen, dessen Ausgangssignal als Korrektursignal an die zentrale Recheneinheit 11 weitergeleitet wird.

Verfügt das Fahrzeug über eine elektronische Memoryfunktion 16, so können sämtliche gespeicherten Einstellwerte für die Sitzposition und die Einstellung der Lehne 5 von der zentralen Recheneinheit aus einem Speicher abgerufen werden.

Zusätzlich kann noch ein Sensor 15 vorgesehen sein, der beispielsweise in Fahrtrichtung gesehen vor dem Innenspiegel 1 montiert ist und den Sonnenstand ermittelt.

Die zentrale Recheneinheit 11 berechnet aus den Sensorinformationen die genaue Augposition 6 und daraus ein drittes Signal, mit dem dann die verschiedenen fahrerbezogenen Funktionseinheiten, d.h. deren Stellmotoren, angesteuert werden können.

So kann der Stellmotor für die Kopfstütze 17, der Stellmotor für die Gurtumlenkung 18, der Stellmotor für die Außenspiegel 19 und der Stellmotor für die Lenkradeinstellung 20 durch die zentrale Recheneinheit 11 angesteuert werden. Darüberhinaus können auch die Stellmotoren der Lüftungsdüsen 22 oder auch ein Blendschutz in Abhängigkeit von der Augposition 6 und dem Meßergebnis des Sensors für den Sonnenstand 15 betätigt werden.

Dabei ist es möglich, die Stellmotoren jeweils über gesonderte Leitungsverbindungen anzusteuern oder auch einzeln adressierbare Stellmotoren zu verwenden. Dadurch könnte ein Bussystem realisiert werden, wodurch der Verdrahtungsaufwand ganz erheblich verringert werden kann.

Durch die Erfindung wird mit einfachen Mitteln eine selbsttätige Funktionseinstellung von fahrerbezogenen Baugruppen auf der basis von wenigen fahrerspezifischen Kenndaten ermöglicht. Damit kann einerseits der Komfort weiter verbessert und andererseits die passive Sicherheit im Kraftfahrzeug ganz entscheidend verbessert werden.

### BEZUGSZEICHENLISTE

- 1: Innenspiegel
- 2: Fahrerkopf
- 3: Kopfstütze
- 4: Abstand x zur Kopfstütze
- 5: Sitzlehne
- 6: Augpunkt
- 7: Blickrichtung
- 8: Einstellwinkel Innenspiegel
- 9: Lot
- 10: Gurtumlenkung
- 11: zentrale Recheneinheit
- 12: Sensor Innenspiegeleinstellung
- 13: Sensor Sitzlehneneinstellung
- 14: Sensor Abstand Kopf/Kopfstütze
- 15: Sensor Sonnenstand
- 16: Sitz-Memory
- 17: Stellmotor Kopfstütze
- 18: Stellmotor Gurtumlenkung
- 19: Stellmotor Außenspiegel
- 20: Stellmotor Lenkradeinstellung
- 21: Stellmotor Blendschutz
- 22: Stellmotor Lüftungsdüsen
- 23: Sicherheitsgurt

## Patentansprüche

1. Verfahren zur individuellen und selbsttätigen Funktionseinstellung von Baugruppen eines Kraftfahrzeuges, insbesondere von der Sicherheit des Fahrzeugführers dienenden Baugruppen auf der Basis von fahrerspezifischen Kenndaten, **dadurch gekennzeichnet, daß** aus der individuellen Einstellung des Innenspiegels (1) ein erstes Signal gewonnen wird, daß aus der Position des Fahrersitzes im Fahrzeug ein zweites Signal gewonnen wird, daß in einer zentralen Recheneinheit (11) aus dem ersten und dem zweiten Signal ein die Position des Augpunktes (6) des Fahrzeugführers repräsentierendes drittes Signal berechnet wird und daß mit dem dritten Signal die Funktionseinstellung von fahrerbezogenen Baugruppen (17; 18; 19; 20; 21; 22) im Kraftfahrzeug vorgenommen wird.

2. Verfahren nach Anspruch 1, **dadurch gekennzeichnet**, daß die Position des Fahrersitzes zumindest aus der Winkeleinstellung der Sitzlehne (5) des Fahrersitzes ermittelt wird.

3. Verfahren nach Anspruch 1 oder 2, **dadurch gekennzeichnet, daß** der individuelle Einstellwinkel (8) des Innenspiegels (1) gegenüber dem Lot (9) oder einem Fahrzeugteil als erstes Signal ermittelt wird.

4. Verfahren nach einem der Ansprüche 1 bis 3, **dadurch gekennzeichnet, daß** dem zweiten Signal ein Korrektursignal überlagert wird.

5. Verfahren nach Anspruch 4, **dadurch gekennzeichnet, daß** das Korrektursignal den Abstand (4) des Kopfes (2) in x-Richtung von der Kopfstütze (3) repräsentiert.

6. Verfahren nach den Ansprüchen 1 bis 5, **dadurch gekennzeichnet, daß** durch die zentrale Recheneinheit (11) aus dem dritten Signal Steuersignale berechnet werden, mit denen die Position der Kopfstütze (3) und die Höhe der Gurtumlenkung (10) eingestellt wird.

7. Verfahren nach einem der Ansprüche 1 bis 6, **dadurch gekennzeichnet, daß** mit den aus dem dritten Signal gewonnenen Steuersignalen die Außenspiegel individuell eingestellt werden.

8. Verfahren nach einem der Ansprüche 1 bis 6, **dadurch gekennzeichnet, daß** mit den aus dem dritten Signal gewonnenen Steuersignalen eine Höhenverstellung des Lenkrades derart vorgenommen wird, daß eine vollständige Instrumentensicht gewährleistet ist.

9. Verfahren nach Anspruch 8, **dadurch gekennzeichnet, daß** dem dritten Signal bei der Berechnung des Steuersignales zur Lenkradhöhenverstellung ein lenkradspezifisches Korrektursignal überlagert wird.

10. Verfahren nach einem der Ansprüche 1 bis 6, **dadurch gekennzeichnet, daß** ein Sonnenstandssensor (15) vorgesehen ist, der ein den Sonnenstand repräsentieren des Winkelsignal liefert, aus dem gemeinsam mit dem ersten Signal ein Steuersignal zur Steuerung einer elektrisch betätigbaren Sonnenblende berechnet wird.

11. Verfahren nach den Ansprüche 1 bis 10, **dadurch gekennzeichnet, daß** für die selbsttätige Funktionseinstellung von Baugruppen (17; 18; 19; 20; 21; 22) in einem ersten Schritt die Memory-Sitzeinstellung selbsttätig vorgenommen wird, daß anschließend die Bestimmung der Augposition erfolgt und daß danach die Baugruppen (17; 18; 19; 20; 21; 22) auf die fahrerspezifischen optimalen Positionen eingestellt werden.

12. Anordnung zur Durchführung des Verfahrens nach den Ansprüchen 1 bis 11 mit einem elektrisch fernbedienbaren Innenspiegel, **dadurch gekennzeichnet, daß** der Innenspiegel (1) mit einem Sensor (12) zur Bestimmung des Einstellwinkels (8) gegenüber dem Lot (9) oder einem Fahrzeugteil versehen ist, daß der Sensor (12) mit der zentralen Recheneinheit (11) verbunden ist, daß die zentrale Recheneinheit (11) weiterhin mit einem Sensor (14) zur Bestimmung des Abstandes des Kopfes (2) des Fahrers von der Kopfstütze (3) und einem Sensor (13) zur Bestimmung der Einstellung der Lehne (5) des Fahrersitzes verbunden ist und daß die Recheneinheit Recheneinheit (11) ausgangsseitig mit Stellmotoren zur Funktionseinstellung von Baugruppen (17; 18; 19; 20; 21; 22) gekoppelt ist.

13. Anordnung nach Anspruch 12, **dadurch gekennzeichnet, daß** die Stellmotoren der Baugruppen (17; 18; 19; 20; 21; 22) jeweils mit der zentralen Recheneinheit (11) verbunden sind.

14. Anordnung nach Anspruch 12, **dadurch gekennzeichnet, daß** die Stellmotoren der Baugruppen (17; 18; 19; 20; 21; 22) einzeln adressierbar sind.

15. Anordnung nach einem der Ansprüche 12 bis 14, **dadurch gekennzeichnet, daß** die Recheneinheit (11) mit dem Speicher (16) der Memory-Sitzeinstellung verbunden ist.
